# EUROPEAN PATENT SPECIFICATION

(11) **EP 3 966 186 B1**
(45) Date of publication and mention of the grant of the patent: **15.11.2023**
(21) Application number: 20729142.8
(22) Date of filing: 06.05.2020
(51) Int. Cl.: C05C 9/00, C05D 9/02, C05G 5/30

(54) **FERTILIZER PARTICLES COMPRISING IRON**
DÜNGEMITTELTEILCHEN MIT EISEN
PARTICULES D'ENGRAIS COMPRENANT DU FER

(30) Priority: 07.05.2019 GB 201906390
(43) Date of publication of application: 16.03.2022
(73) Proprietor: Yara UK Limited, York, YO42 1DN (GB)
(72) Inventor: WARD, Stuart, Grimsby DN37 9TZ (GB); HATHWAY, Laura, Grimsby DN37 9TZ (GB)
(74) Representative: Dummett Copp LLP
(86) International application number: PCT/GB2020/051115
(87) International publication number: WO 2020/225559

(56) References cited:
- EP-A1- 0 334 630
- EP-B1- 0 334 630
- WO-A1-2015/145221
- US-A1- 2013 231 299
- US-A1- 2017 044 078
- US-A1- 2018 201 548
- US-A1- 2018 201 552

## Description

### Field of the invention

The present disclosure relates to the field of fertilizer particles, in particular fertilizer particles comprising a core and an outside layer of a conditioning agent comprising an iron chelate component dissolved in a solvent; a method to manufacture a fertilizer particle comprising a layer of a conditioning agent comprising an iron chelate; a non-aqueous liquid composition comprising an iron chelate component dissolved in a solvent; and the use of such a composition as a coating agent for fertilizer particles.

### Background of the invention

Iron (Fe) is a micronutrient required by all plants and crops to optimize their growth. It plays a role in a large number of biological processes, such as nitrate and sulfate reduction, energy production, chlorophyll synthesis, and lignin formation. Although iron is found in most soils, it is often required to supply crops with an additional source of iron to meet all the crop requirements.

Iron deficiency is a common micronutrient disorder in many crops, particularly those grown in areas with calcareous and high pH soils. In general, soil application of inorganic iron sources such as ferrous sulphate is ineffective in treating this micronutrient deficiency because the iron is rapidly converted into non-available, insoluble forms under these soil conditions, e.g. iron oxide. It is therefore common agricultural practice to use chelated forms of iron. Iron chelate compounds contain Fe as a ferric (Fe³⁺) or ferrous (Fe²⁺) cation and a ligand. The ligand is often an organic molecule, which can be soluble in a range of organic solvents and water. The resulting ligand-metal complex can exhibit high solubility in oxygenated solvents like water, alcohols or ethers. Ethylenediaminetetraacetate (EDTA) is a well-known ligand with high affinity for most transition metals, including iron. Ethylenediamine-N,N'-bis(ortho-hydroxyphenylacetic acid) and ethylenediamine-N-[(ortho-hydroxyphenyl)acetic acid]-N'-[(para-hydroxyphenyl)acetic acid] are other ligands suitable to form chelates with iron to use as fertilizers. Commercially available products usually contain mixtures of the aforementioned ortho-ortho (o-o) and ortho-para (o-p) isomers and are collectively referred to as FeEDDHA. Other effective iron chelates are the ferric chelate complexes of ethylenediamine-N,N'-di[ortho-hydroxymethylphenyl]acetic acid] and ethylenediamine-N-[ortho-hydroxy-methylphenyl]acetic acid]-N'-[(para-hydroxy-methylphenyl) acetic acid]. Commercially available products may contain mixtures of the aforementioned ortho-ortho and ortho-para isomers and are collectively referred to as FeEDDHMA. Another effective iron chelate is the ferric chelate complex of N,N'-di(2-hydroxybenzyl)ethylenediamine-N,N'-diacetic acid, commonly referred to as FeHBED.

Typically FeEDDHA, FeEDDHMA and FeHBED chelates are supplied as powders, granules or micro-granules and it is common practice to apply these directly to the soil or dissolve them in irrigation water before application to the soil.

However, as well as the aforementioned methods of application it is also possible to incorporate iron and other micronutrients into solid fertilizers such as prills or granules containing one or more of the primary nutrients (nitrogen - N, phosphorus - P and potassium - K) which are applied by spreading onto the soil. There is often a requirement to incorporate micronutrients, including iron, in these mainstream solid fertilizers in order to meet the agronomic requirements of the crop. This can be achieved by incorporating micronutrients during the prilling or granulation process but practical considerations in high volume production operations imply that it is difficult to satisfy the widely different nutrient requirements of different crops and different soil types using this approach.

For micronutrients, incorporation of the nutrient source in the coating of a fertilizer particle is a well-known method. Several types of particles containing one or several primary nutrients (N, P, K) require the application of a coating composition to increase the durability of such particles, so adding a micronutrient source in the coating composition is an efficient way to solve both problems. In a coating composition, the micronutrient source is dissolved or suspended in a liquid phase.

For example, GB25132232 (Yara, 2014) discloses a method to prepare fertilizers coated with a layer of an oil-based composition comprising a micronutrient source. However, attempts to prepare oil-based suspensions of FeEDDHA, FeEDDHMA and FeHBED have proved unsuccessful. For example, preparation of compositions consisting of FeEDDHA or FeHBED suspended in various oils including rapeseed oil, methylated seed oil or light mineral oil made using the methods described in GB25132232 resulted in the formation of highly viscous sticky masses even with iron concentrations as low as 2% by weight. Such compositions would be extremely difficult to handle and could not be easily applied as a fertilizer coating.

EP0334630 (PHOSYN, 1989) discloses a composition comprising an iron chelate, such as FeEDDHA and FeEDDHMA, and a polyhydric alcohol or ether solvent, such as ethylene glycol and ethylene glycol monoethyl ether. The composition is diluted with water and applied directly to soils to supply crops with iron.

FR2808021 (Synthron Chemicals, 2001) discloses a liquid composition comprising a sodium or potassium salt of FeEDDHA or FeEDDHMA, a dispersing agent, and a polymeric alkylene oxide, e.g. polyethylene glycols, polypropylene glycols and their derivatives. The composition may be diluted with water and applied to soils or as a foliar spray to treat iron chlorosis, i.e. iron deficiency.

WO03042128 (Akzo Nobel, 2003) discloses a composition comprising water, an iron chelate and an amide with the formula RCONH₂, which may be urea.

CN10638008 A (SHANDONG SUNWAY LANDSCAPE TECH CO LTD, 2017) discloses an aqueous solution comprising an alkaline soil scale inhibitor comprising chelated iron, diethylene glycol and urea.

US2018/201548 discloses a coated fertilizer wherein the coating comprises an oil (preferably environmentally acceptable such as vegetable oil) and a micronutrient that can be iron chelate.

US2013/231299 discloses a coating composition for kaolin granules comprising polyethylene gylcol and preferably iron chelates. It may further comprise urea as an additional nutrient.

### Summary of the invention

Surprisingly it has now been discovered that compositions containing an iron chelate component dissolved in a solvent selected from the group of glycols, glycol ethers and mixtures thereof, are highly suitable for fertilizer coating applications, thus providing an easy and flexible method whereby solid fertilizers can be coated with an effective source of iron without negatively affecting fertilizer quality.

In the first aspect of the invention, a fertilizer particle is provided, the particle comprising a core and an outside layer of a conditioning agent comprising an iron chelate component dissolved in a solvent, wherein the solvent is selected from the group of glycols, glycol ethers and mixtures thereof, and the solvent represents from about 30 to about 90 wt% of the conditioning agent.

In another aspect, a method to manufacture a fertilizer particle is provided, wherein the fertilizer particle comprises a layer of a conditioning agent comprising iron, the method comprising the steps of: (a) providing a fertilizer particle core; and (b) applying to the fertilizer particle core an amount of a conditioning agent comprising an iron chelate component dissolved in a solvent selected from the group of glycols, glycol ethers and mixtures thereof, wherein the solvent represents from about 30 to about 90 wt% of the conditioning agent.

In another aspect, a non-aqueous liquid composition is provided, the composition comprising an iron chelate component dissolved in a solvent selected from the group of glycols, glycol ethers and mixtures thereof and urea, wherein the liquid composition comprises at least 30 g/L of iron.

In another aspect, the use of a composition as a coating agent for fertilizer particles is provided, the composition comprising an iron chelate component dissolved in a solvent selected from the group consisting of glycols, glycol ethers and mixtures thereof, and optionally urea.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, preferably +/-10 % or less, more preferably +/-5 % or less, even more preferably +/-1 % or less, and still more preferably +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight%", "weight percent", "°/ w/w", "wt%" or "%wt", here and throughout the description unless otherwise defined, refers to the relative weight of the respective component based on the overall weight of the formulation.

In the first aspect of the invention, a fertilizer particle is provided, the particle comprising a core and an outside layer of a conditioning agent comprising an iron chelate component dissolved in a solvent, characterized in that the solvent is selected from the group of glycols, glycol ethers and mixtures thereof, and represents from about 30 to about 90 wt% of the conditioning agent.

It was found that it was possible to prepare a fertilizer particle comprising a high amount of iron chelate by coating a fertilizer core, comprising nutrients, with a conditioning agent comprising an iron chelate component dissolved in a solvent. From EP0334630, it is known that liquid compositions comprising an iron chelate in high concentrations, above 3 wt% of iron, can be achieved using a solvent from the group of glycols and glycol ethers, such as monoethylene glycol, diethylene glycol and ethylene glycol monoethyl ether. It was found that these compositions can be applied to solid fertilizer cores to provide fertilizer compositions comprising a suitable iron source. The solvent may be of high purity, in particular it may be at least 98% pure, more in particular at least 99% pure. The conditioning agent should comprise from about 30 to about 90 wt% of solvent, so that it is suitable to be coated onto a solid fertilizer core. The solvent may be a single chemical component, but it may also be a mixture of two or more glycols or glycol ethers.

The amount of solvent that is possible to use may depend on the iron chelate selected for the conditioning agent and the iron loading desired. In one embodiment, the solvent may represent from about 40 to about 80 wt% of the conditioning agent. In particular, it may represent from about 40 to about 50 wt% of the conditioning agent. The fertilizer particle comprising the layer of conditioning agent was found to be free-flowing, which is important for handling operations. In addition, the product showed good anti-caking properties and its crushing strength was not decreased too much compared to the uncoated product. Anti-caking and crushing strength are important parameters for fertilizer particles that affect the storability of the particles.

In one embodiment, the outside layer of conditioning agent may cover at least 95% of the surface of the core, in particular at least 96°/ of the surface, more in particular at least 98% of the surface, even more in particular at least 99% of the surface. In one embodiment, the layer of conditioning agent may cover 100% of the surface of the core of the fertilizer particle.

In one embodiment, the conditioning agent comprises urea. Surprisingly, it was also found that adding a small amount of urea to the conditioning agent decreased the viscosity of such agents. When these agents are applied onto solid particles, such as fertilizer particles, it is desirable that the conditioning has a viscosity which enables a good and even coating. Several methods may be used to apply a conditioning agent onto solid particles, e.g. mixing in a blender, spraying the agent. In particular, the conditioning agent may have a viscosity at 20 °C in the range from about 0.005 to about 7 Pa·s (5 to 7000 cP), in particular in the range from about 0.1 to about 5 Pa·s (100 to 5000 cP). If a spraying method is used and the viscosity is too high, the liquid will not be easy to be sprayed and it might block the spraying equipment. Further, the repartition of the resulting coating on the particles may be uneven due to high viscosity. Since urea is a nutrient source, the addition of urea in the conditioning agent does not reduce the overall nutrient content of the fertilizer particle. Urea may be added as a solid and dissolves readily in the organic solvent. It may be dissolved in a small amount of solvent before mixed with the conditioning agent. To ensure a high quality of the final product, the coated fertilizer particle, the urea may be very pure. In particular, it may be more than 95% pure, more in particular more than 96% pure, even in more in particular more than 97% pure, even in more in particular more than 98% pure, even in more in particular more than 99% pure. Urea may contain water and/or biuret in a low amount, in particular it may contain less than 5 wt% of water or biuret, more in particular less than 2 wt% of water or biuret. In one embodiment, the conditioning agent comprises about 0.1 to about 5.0 wt% of urea. In particular, it may comprise up to 2.0 wt% of urea.

In one embodiment, the solvent is selected from the group of monoethylene glycol, monopropylene glycol, diethylene glycol, 2-(2-ethoxyethoxy)ethan-1-ol, also known as diethylene glycol monoethyl ether, and mixtures thereof. Monoethylene glycol, monopropylene glycol, diethylene glycol and 2-(2-ethoxyethoxy)ethan-1-ol are all well-known glycol-type solvents widely used in the chemical industry. They are well tolerated by plants, although some of these substances are classified as hazardous, such as monoethylene glycol, diethylene glycol. It was found that 2-(2-ethoxyethoxy)ethan-1-ol is a particularly suitable solvent for the preparation of high iron chelate concentration liquid solutions, since 2-(2-ethoxyethoxy)ethan-1-ol is classified as non-hazardous substance. It reduces the risks when manipulating the conditioning agent. In one embodiment, the solvent is 2-(2-ethoxyethoxy)ethan-1-ol. In one embodiment, the solvent is monoethylene glycol.

In one embodiment, the conditioning agent comprises in particular between 40 and 90 weight% of the solvent.

In one embodiment, the conditioning agent comprises at least 30 g/L of iron, in particular at least 35 g/L of iron, more in particular at least 40 g/L, even more in particular at least 44 g/L of iron. Here, a stated mass per unit volume refers to the total mass of iron cations in the conditioning agent. To supply an amount of iron high enough to the plants, it was found that the conditioning agent should comprise at least 30 g/L of iron. A high iron loading of the agent allows the farmer or fertilizer supplier to use a lower loading of the conditioning agent on the fertilizer core. This is desirable since a high loading might reduce the physical properties of the final product, such as anti-caking or strength indexes. A high coating loading might also make the product sticky and difficult to store, handle and spread in the field. Iron is essentially present in the conditioning in the form of an iron chelate component. Other sources of iron, for example inorganic salts, are not desired because they are not stable enough in typical soil conditions and they rapidly become unavailable to plants.

In one embodiment, the iron chelate component is a ferric chelate complex of a chelating agent, wherein the chelating agent is an amino-alcohol or an aminopolycarboxylic acid, in particular selected from the group of ethylenediamine-N, N'-di[(ortho-hydroxyphenyl) acetic acid], ethylenediamine-N-[(ortho-hydroxyphenyl)acetic acid]-N'-[(para-hydroxyphenyl)acetic acid], ethylenediamine-N,N'-di[ortho-hydroxy-methylphenyl]acetic acid], ethylenediamine-N-[ortho-hydroxymethylphenyl]acetic acid]-N'-[(para-hydroxy-methylphenyl)acetic acid] or N,N'-di(2-hydroxybenzyl) ethylenediamine-N,N'-diacetic acid, and mixtures thereof. Iron chelates are commercially available as a wide range of compounds. It was found that those comprising an amino-alcohol or an aminopolycarboxylic acid are particularly suitable for the present conditioning agent. They are generally not toxic to plants and they have a high solubility in a wide range of organic solvents, including glycol and glycol ether solvents. The ferric complexes from the following compounds: ethylenediamine-N, N'-di[(ortho-hydroxyphenyl) acetic acid], ethylenediamine-N-[(ortho-hydroxyphenyl)acetic acid]-N'-[(para-hydroxyphenyl)acetic acid], ethylenediamine-N,N'-di[ortho-hydroxy-methylphenyl]acetic acid], ethylenediamine-N-[ortho-hydroxy-methylphenyl]acetic acid]-N'-[(para-hydroxy-methylphenyl)acetic acid] or N,N'-di(2-hydroxybenzyl)ethylenediamine-N,N'-diacetic acid, are aminopolycarboxylic acids and known to be suitable iron sources for agricultural sources. They are each stable over a specific range of pH. The chelating agent ensures that the iron cation stays in its soluble form available to plants and does not oxidize to iron oxide, which is not water-soluble and is not taken up by plants.

In one embodiment, the conditioning agent comprises an anti-foam agent. A possible method to apply the conditioning agent to solid particles implies spraying the agent onto the particles. The particles may be in a rotating drum or lying on a bed. When spraying composition comprising organic compounds, there is always a risk that the composition will foam. Foam appears when air bubbles are trapped within a layer of organic compound. To prevent that, it is possible to add an anti-foam agent to the composition before the spraying operation. A wide range of anti-foam agents are commercially available from suppliers, for example Synthron. The anti-foam agent are usually added in a very small amount, in particular from 0.001 to about 1.0 weight% compared to the total composition, and do not affect the properties of the composition except for the foaming tendency.

In one embodiment, the mass ratio of iron chelate component to solvent in the conditioning agent is in the range of from 1:9 to 3:1, in particular in the range of from 1:3 to 3:1, and more in particular in the range of from 1:2 to 2:1. It is desirable to achieve a suitable ratio of iron chelate component to solvent. If the ratio is too high, the chelate might not be completely soluble in the solvent or the viscosity of the composition might become too high. This creates a problem to apply the conditioning agent onto the fertilizer particles. If the ratio is too low, the concentration of iron will be very low. To supply enough iron to the plants will require either to apply more conditioning agent onto the fertilizer particles, which may degrade the physical properties of the particles, or will require a higher application rate of the particles, which increases the operational costs for the farmer. Further, the other nutrients comprised in the particles may be supplied in an excess amount to the crops, which may have negative impact on the environment. For example, if too much nitrates or phosphates are supplied to a soil, these ions will not be retained properly by the soil and will leach in the environment. It was found that a mass ratio of iron chelate component to solvent in the conditioning agent may be in the range of from 1:9 to 3:1, in particular in the range of from 1:3 to 3:1, and more in particular in the range of from 1:2 to 2:1.

In one embodiment, the conditioning agent is essentially water-free. It may be desirable for the conditioning agent to be essentially water-free, as water may decrease the physical properties, such as particle strength and anti-caking character, of the fertilizer particles. It may be difficult to obtain a completely anhydrous conditioning agent, but the conditioning agent may comprise less than 5 wt% of water, in particular less than 2 wt%, more in particular less than 1 wt%, even more in particular less than 0.5 wt%. The components of the conditioning agent, the solvent, the iron chelate, and optionally the urea, may each contain a small amount of water, e.g. less than 5 wt% of water. In particular, they may each comprise less than 2 wt% of water, more in particular less than 1 wt% of water.

In one embodiment, the conditioning agent represents 0.1 to 2.0 weight%, in particular 0.1 to 1.0 weight%, of the fertilizer particle. It is important for the conditioning agent to be comprised in the fertilizer particle at the right amount. If the composition comprises too little conditioning agent, the amount of iron supplied to the crops will not be enough to obtain the best yield. But if it contains too much, the overall nutrient content of the composition will be reduced: both the solvent and the ligand do not deliver nutrients to the plants. Further, the physical properties of the fertilizer particle, such as particle strength, stickiness, might be reduced because of the high amount of solvent.

In one embodiment, the fertilizer core comprises at least one component selected from the group of urea, ammonium salts, nitrate salts, phosphate salts, potassium salts, calcium nitrate and mixtures thereof. It is desirable that the fertilizer core comprises a high percentage of nutrients available to plants. Urea, ammonium salts and nitrate salts are three sources of nitrogen for plants; phosphate salts is the main source of phosphorus for plants; other cations, such as potassium and calcium are also important nutrients for plants. In one embodiment, the fertilizer core comprises urea. In one embodiment, the fertilizer comprises all three primary nutrients, N, P and K. Such a fertilizer is named NPK fertilizer. In addition to primary nutrients, the fertilizer core may comprise at least one source of one or more of the secondary nutrients (calcium, sulphur, magnesium) and micronutrients (boron, manganese, molybdenum, copper and zinc). Suitable sources of these elements for use in agriculture are well known in the field.

In one embodiment, the conditioning agent comprises from about 0.1 to about 10 weight% of urea relative to the weight of the composition. It was found that it was preferable for the conditioning agent to comprise between about 0.1 and about 10 weight% of urea relative to the total composition of the conditioning agent. If too little urea is used, the effect of decreasing the viscosity is not enough to provide a suitable composition. If too much urea is used, the iron content decreases and becomes too low for agricultural purposes. In particular, the conditioning agent may comprise from about 0.1 to about 5.0 weight% of urea relative to the weight of the composition. More in particular, the conditioning agent comprises from about 0.1 to about 3.0 weight% of urea.

In one embodiment, the conditioning agent comprises about 35 to about 55 wt% of FeEDDHA, about 40 to about 60 wt% of monoethylene glycol, optionally 0.01 to 1.0 wt% of an anti-foam agent and optionally 0.1 to 5.0 wt% of urea.

In one embodiment, the conditioning agent comprises about 35 to about 60 wt% of FeEDDHA, about 35 to about 60 wt% of diethylene glycol monoethyl ether, optionally 0.01 to 1.0 wt% of an anti-foam agent and optionally 0.1 to 5.0 wt% of urea.

In one embodiment, the conditioning agent comprises about 5 to about 25 wt% of FeHBED about 70 to about 90 wt% of monoethylene glycol, optionally 0.01 to 1.0 wt% of an anti-foam agent and optionally 0.1 to 5.0 wt% of urea.

In one embodiment, the conditioning agent comprises about 35 to about 55 wt% of FeEDDHA, about 40 to about 60 wt% of diethylene glycol, optionally 0.01 to 1.0 wt% of an anti-foam agent and optionally 0.1 to 5.0 wt% of urea.

In one embodiment, the conditioning agent comprises an acid. In particular, the acid may be organic, i.e. a small molecule. More in particular, the acid may be a polycarboxylic acid, even more in particular it may be selected from the group of citric acid, malic acid and mixtures thereof.

When the conditioning agent was applied onto a fertilizer particle comprising an ammonium source, for example calcium ammonium nitrate, it was noted that the particles emitted a strong and unpleasant smell. Upon analysis via a Drager tube, the smell was identified as being ammonia. Without being bound by theory, it is supposed that an element in the conditioning agent, for example the solvent or the iron chelate component, may exhibit a basic character and catalyse the transformation of ammonium to ammonia. It was found that adding a component with an acidic character to the conditioning agent reduced the problem. A suitable acid needs to fulfil several criteria: acidic enough to stop the ammonia emission but not react or interact with the other elements of the fertilizer particle and/or the conditioning agent; preferably soluble in the solvent or solvent mixture used in the conditioning agent; preferably with a low health and safety risk to avoid complicating the use of the conditioning agent; commercially available at reasonable cost; preferably available pure or in an anhydrous solvent, however, it may be available as an hydrate complex. It was found that malic acid and citric acid are two chemicals fulfilling these criteria and are suitable to be added to the conditioning agent. Malic acid is a bis-carboxylic acid with pKas of 3.4 and 5.2, citric acid is a tri-carboxylic acid with pKas of 3.1, 4.8 and 6.4. It may be an advantage to lower the pH of the conditioning agent to about 7 or below to reduce the ammonia emissions from the fertilizer particles. A conditioning agent wherein citric acid was added to adjust the pH to about 7, was shown to reduce ammonia emissions by about 50% compared to the same conditioning agent without citric acid and possessing a pH of 8.7. The pH of the conditioning agent may be kept above 5. Below pH = 5, the stability of the iron chelate complex may be affected, and the iron atoms may precipitate and become unavailable for the plant. The conditioning agent may comprise from about 0.5 to about 10 weight% of the acid. In particular, it may comprise from about 0.5 to about 5 weight% of the acid, more in particular from about 1 to about 5 weight% of the acid. In one embodiment, the pH of the conditioning agent may be between 5.0 and 7.0.

In one embodiment, the conditioning agent comprises about 45 to about 60 wt% of FeEDDHA, about 35 to about 50 wt% of diethylene glycol, 0.01 to 1 weight% of an anti-foam agent, 0.1 to 1.0 wt% of urea and 0.5 to 2.0 weight% of citric acid, preferably anhydrous citric acid.

In another aspect, a method to manufacture a fertilizer particle, wherein the fertilizer particle comprises an outside layer of a conditioning agent comprising iron, is provided. The method comprises the steps of: (a) providing a fertilizer particle core; and (b) applying to the fertilizer particle core an amount of a conditioning agent comprising an iron chelate component dissolved in a solvent selected from the group of glycols, glycol ethers and mixtures thereof, wherein the solvent represents from about 30 to about 90 wt% of the conditioning agent. This aspect may exhibit the same or similar features and technical effects as the first aspect, and vice versa.

A number of well-established methods can be used to coat a fertilizer particle core with a liquid composition, e.g. spraying the composition above the particles sitting on a conveyor, mixing the composition and the particles in a rotating drum. Any coating method known in the art may be used with the present invention.

In one embodiment, the solvent is selected from the group of monoethylene glycol, monopropylene glycol, diethylene glycol, 2-(2-ethoxyethoxy)ethan-1-ol, also known as diethylene glycol monoethyl ether and mixtures thereof.

In one embodiment, the conditioning agent comprises at least 30 g/L of iron, in particular at least 35 g/L of iron, more in particular at least 40 g/L, even more in particular at least 44 g/L of iron.

In one embodiment, the iron chelate component is a ferric chelate complex of a chelating agent, wherein the chelating agent is an amino-alcohol or an aminopolycarboxylic acid, in particular the chelating agent is selected from the group of ethylenediamine-N, N'-di[(ortho-hydroxyphenyl) acetic acid], ethylenediamine-N-[(ortho-hydroxyphenyl)acetic acid]-N'-[(para-hydroxyphenyl)acetic acid], ethylenediamine-N,N'-di[ortho-hydroxy-methylphenyl]acetic acid], ethylenediamine-N-[ortho-hydroxy-methylphenyl]acetic acid]-N'-[(para-hydroxy-methylphenyl)acetic acid] or N,N'-di(2-hydroxybenzyl)ethylenediamine-N,N'-diacetic acid, and mixtures thereof.

In one embodiment, the conditioning agent used in the method described above comprises urea. Surprisingly, it was also found that adding a small amount of urea to the conditioning agent decreased the viscosity of such agents.

In one embodiment, the conditioning agent comprises an anti-foam agent. A possible method to apply a conditioning agent onto solid particles implies spraying the agent onto the particles. The particles may be in a rotating drum or lying on a bed. When spraying composition comprising organic compounds, there is always a risk that the composition will foam. Foam appears when air bubbles are trapped within a layer of organic compound. To prevent that, it is possible to add an anti-foam agent to the composition before the spraying operation. A wide range of anti-foam agents are commercially available from suppliers, for example Synthron. The anti-foam agent are usually added in a very small amount, typically less than 1.0 weight% compared to the total composition and do not affect the properties of the composition except for the foaming tendency.

In one embodiment, the conditioning agent comprises an acid. In particular, the acid may be organic, i.e. a small molecule. More in particular, the acid may be a polycarboxylic acid, even more in particular it may be selected from the group of citric acid, malic acid and mixtures thereof.

In one embodiment, the conditioning agent represents 0.1 to 2 weight%, in particular 0.1 to 1.0 weight%, of the fertilizer particle.

In another aspect, a non-aqueous liquid composition comprising an iron chelate component dissolved in a solvent selected from the group of glycols, glycol ethers and mixtures thereof, and urea, wherein the liquid composition comprises at least 30 g/L of iron, is provided. In another aspect, a liquid composition comprising an iron chelate component dissolved in a solvent selected from the group of glycols, glycol ethers and mixtures thereof, and urea, wherein the solvent represents from about 30 to about 90 wt% of the conditioning agent, is provided. This aspect may exhibit the same or similar features and technical effects as the first aspect, and vice versa.

This composition may be used to coat fertilizer particles to provide an iron source to the particles. Liquid compositions comprising a solvent selected from the group of glycols and glycol ethers, an iron chelate component have been described previously in EP0334630. Surprisingly, it was found that adding a small amount of urea to the compositions described previously decreased the viscosity of such compositions. When these compositions are applied onto solid particles, such as fertilizer particles, it is desirable that the liquid composition has a suitable viscosity which enables a good and even coating.

In one embodiment, the solvent in the liquid composition is selected from the group of monoethylene glycol, monopropylene glycol, diethylene glycol, 2-(2-ethoxyethoxy)ethan-1-ol, also known as diethylene glycol monoethyl ether and mixtures thereof. Several examples of glycol and glycol ethers were found to be particularly suitable to prepare a composition with an iron chelate and urea. Diethylene glycol monoethyl ether is classified as a non-hazardous substance so it is particularly suitable as a solvent.

In one embodiment, the liquid composition comprises between 30 and 90 weight% of solvent, in particular between 40 and 90 weight% of solvent.

In one embodiment, the iron chelate component is a ferric chelate complex of a chelating agent selected from the group of ethylenediamine-N, N'-di[(ortho-hydroxyphenyl) acetic acid], ethylenediamine-N-[(ortho-hydroxyphenyl)acetic acid]-N'-[(para-hydroxyphenyl)acetic acid], ethylenediamine-N, N'-di[ortho-hydroxy-methylphenyl]acetic acid], ethylenediamine-N-[ortho-hydroxy-methylphenyl]acetic acid]-N'-[(para-hydroxy-methylphenyl)acetic acid], N,N'-di(2-hydroxybenzyl)ethylenediamine-N,N'-diacetic acid, and mixtures thereof. Iron chelates are commercially available in many different forms and comprise different chelating ligands. A ferric chelate is an iron chelate wherein the iron has an oxidation number of +3, so iron is present as Fe(III) or Fe³⁺. Fe(III) can bind to multi-dentate ligands comprising several electron-donor atoms such as nitrogen and oxygen. Ligands comprising a mixture of carboxylic acids, phenolic alcohols and amines are well-known ligands for Fe(III).

In one embodiment, the liquid composition comprises from about 0.1 to about 10 weight% of urea relative to the weight of the composition. It was found that an amount of urea comprised between about 1.0 and 10 weight% of the total liquid composition is preferable. If too much urea is used, the iron content decreases and becomes too low for agricultural purposes. In particular the liquid composition may comprise from about 0.1 to about 5.0 weight% of urea, more in particular from about 0.1 to about 2.0 weight% of urea.

In one embodiment, the mass ratio of iron chelate component to solvent is in the range 1:9 to 3:1, in particular in the range 1:3 to 3:1, and more in particular in the range 1:2 to 2:1. The ratio of iron chelate to solvent has to be optimized to obtain a composition with the desired characteristics. The composition has to have a suitable viscosity so that it can be applied onto solid particles and the iron content has to be high enough so that it provides enough iron to the plants in a minimum of applications.

In one embodiment, the liquid composition comprises an anti-foam agent.

In one embodiment, the liquid composition comprises an acid. In particular, the acid may be organic, i.e. a small molecule. More in particular, the acid may be a polycarboxylic acid, even more in particular it may be selected from the group of citric acid, malic acid and mixtures thereof.

In one embodiment, the liquid composition has a pH between 5.0 and 7.0.

In another aspect, the use of a composition comprising an iron chelate component dissolved in a solvent selected from the group consisting of glycols, glycol ethers and mixtures thereof, and optionally urea, as a coating agent for fertilizer particles is provided.

In one embodiment, the composition used as a coating agent for fertilizer particles comprises from about 30 to about 90 weight% of solvent, in particular from about 40 to about 90 weight%.

In another aspect, the use of the liquid composition as disclosed above as a coating agent for fertilizer particles, is also provided.

This aspect may exhibit the same or similar features and technical effects as the first aspect, and vice versa.

In one embodiment, the composition comprises an anti-foam agent.

In one embodiment, the composition comprises an acid. In particular, the acid may be organic, i.e. a small molecule. More in particular, the acid may be a polycarboxylic acid, even more in particular it may be selected from the group of citric acid, malic acid and mixtures thereof. In one embodiment, the composition has a pH between 5.0 and 7.0.

The invention will now be further described with reference to the following examples.

### Example 1 (not according to the invention)

The following example shows the formulation required to make 1 kg of a liquid iron chelate composition based on high ortho-ortho FeEDDHA:

| | |
|---|---|
| FeEDDHA (6% w/w Fe; 4.8% o-o) | 475.7 g |
| Monoethylene glycol | 524.3 g |
| Total | 1000.0 g |

The solvent was placed in a glass vessel fitted with an impeller stirrer. The iron chelate powder was added slowly to the stirred solvent, controlling the rate of addition in such a way as to avoid clumping. After completing the addition, stirring was continued for 120 minutes to ensure complete dissolution. The process can be carried out at room temperature or alternatively the solvent/mixture may be heated to 30-40°C in order to speed up the dissolution.

The resultant product was a dark red-brown, slightly viscous solution with the following physiochemical characteristics:

| | |
|---|---|
| Density: | 1.226 kg/l at 20°C |
| Viscosity (Brookfield, Spindle 3, 12 rpm) | 1390 cP at 20°C |
| Fe content: | 2.85% w/w (=35 g/l) |

The product remained stable for at least 8 weeks when stored at room temperature, 0°C and 45°C.

### Example 2 (not according to the invention)

The following example shows the formulation required to make 1 kg of a liquid iron chelate composition based on medium ortho-ortho content FeEDDHA:

| | |
|---|---|
| FeEDDHA (6% w/w Fe; 4.0% o-o) | 475.7 g |
| Monoethylene glycol | 523.0 g |
| Anti-foam agent | 1.3 g |
| Total | 1000.0 g |

The product was prepared in a similar manner to Example 1.

The resultant product was a dark red-brown, slightly viscous solution with the following physiochemical characteristics:

| | |
|---|---|
| Density: | 1.226 kg/l at 20°C |
| Viscosity (Brookfield, Spindle 3, 12 rpm) | 740 cP at 20°C |
| Fe content: | 2.85% w/w (=35 g/l) |

The product remained stable for at 8 weeks when stored at room temperature, 0°C and 45°C.

### Example 3 (not according to the invention)

The following example shows the formulation required to make 1 kg of a liquid iron chelate composition based on FeHBED:

| | |
|---|---|
| FeHBED (6% w/w Fe) | 158.6 g |
| Monoethylene glycol | 840.2 g |
| Anti-foam agent | 1.2 g |
| Total | 1000.0 g |

The product was prepared in a similar manner to Example 1.

The resultant product was a dark red-brown, slightly viscous solution with the following physiochemical characteristics:

| | |
|---|---|
| Density: | 1.116 kg/l at 20°C |
| Viscosity (Brookfield, Spindle 3, 12 rpm) | 4600 cP at 20°C |
| Fe content: | 0.95% w/w (= 11g/l) |

The product remained stable for at 8 weeks when stored at room temperature, 0°C and 45°C.

### Example 4 (not according to the invention)

The following example shows the formulation required to make 1 kg of a liquid iron chelate composition based on high ortho-ortho FeEDDHA:

| | |
|---|---|
| FeEDDHA (6% w/w Fe; 4.8% o-o) | 548.8 g |
| Diethylene glycol monoethyl ether | 451.2 g |
| Total | 1000.0 g |

The product was prepared in a similar manner to Example 1.

The resultant product was a dark red-brown, slightly viscous solution with the following physiochemical characteristics:

| | |
|---|---|
| Density: | 1.320 kg/l at 20°C |
| Viscosity (Brookfield, Spindle 3, 12 rpm) | 1730 cP at 20°C |
| Fe content: | 3.29% w/w (= 43 g/l) |

The product remained stable for at 8 weeks when stored at room temperature, 0°C and 45°C.

### Example 5 (not according to the invention)

The following example shows the formulation required to make 1 kg of a liquid iron chelate composition:

| | |
|---|---|
| FeEDDHA (6% w/w Fe; 4.8% o-o) | 452.6g |
| Diethylene glycol | 547.4g |
| Total | 1000.0g |

The product was prepared in a similar manner to Example 1.

The resultant product was a dark red-brown, slightly viscous solution with the following physiochemical characteristics:

| | |
|---|---|
| Density: | 1.292 kg/l at 20°C |
| Viscosity (Brookfield, Spindle 3, 12 rpm) | 2450 cP at 20°C |
| Fe content: | 2.72% w/w (= 35 g/l) |

The product remained stable for at 8 weeks when stored at room temperature, 0°C and 45°C.

### Example 6 (not according to the invention)

The following example shows the formulation required to make 1 kg of a liquid iron chelate composition based on high ortho-ortho FeEDDHA using monoethylene glycol as solvent:

| | |
|---|---|
| FeEDDHA (6% w/w Fe; 4.8% o-o) | 542.0 g |
| Monoethylene glycol | 458.0 g |
| Total | 1000.0 g |

The solvent was placed in a glass vessel under a Silverson high shear rotor/stator mixer. The mixer was started and the iron chelate powder was added slowly to the mixed solvent, controlling the rate of addition in such a way as to avoid clumping. After completing the addition, mixing was continued for 9 minutes to ensure complete dissolution.

The resultant product was a dark red-brown, slightly viscous solution with the following physiochemical characteristics:

| | |
|---|---|
| Density: | 1.342 kg/l at 20°C |
| Viscosity (Brookfield, Spindle 3, 12 rpm) | 5650 cP at 20°C |
| Fe content: | 3.25% w/w (= 44 g/l) |

### Example 7

The following example shows the formulation required to make 1 kg of a liquid iron chelate composition based on high ortho-ortho FeEDDHA using monoethylene glycol as solvent and incorporating urea:

| | |
|---|---|
| FeEDDHA (6% w/w Fe; 4.8% o-o) | 542.0g |
| Monoethylene glycol | 453.4g |
| Urea | 4.6g |
| Total | 1000.0g |

The product was prepared in a similar manner to Example 6 but dissolving the urea in the solvent prior to the addition of the iron chelate.

The resultant product was a dark red-brown, slightly viscous solution with the following physiochemical characteristics:

| | |
|---|---|
| Density: | 1.344 kg/l at 20°C |
| Viscosity (Brookfield, Spindle 3, 12 rpm) | 3020 cP at 20°C |
| Fe content: | 3.25% w/w (=44 g/l) |

Comparison of Examples 6 and 7 demonstrates the effect that adding a small amount of urea to the formulation has in reducing the viscosity of compositions using high concentrations of high ortho-ortho content FeEDDHA.

### Example 8

A composition according to Example 2 was tested for agronomic efficacy in a replicated field trial conducted on Bermuda grass. The study was arranged in a randomized complete block design using four replications. The iron chelate composition was coated onto Granular Compound NPK Fertilizer 21-7-14 at a rate of 3.8kg/MT (equating to an iron concentration on the carrier fertilizer of 0.011% w/w). The following treatments were used in order to compare the coated fertilizer against untreated controls (without input of Fe) and conventional treatment using iron sulphate:

| Treatment No | Fertilizer Input | Application Rate |
|---|---|---|
| 1 | Untreated | - |
| 2 | NPK 21-7-14 | 232 kg/hectare |
| 3 | NPK 21-7-14 plus ferrous sulphate | 232 kg/hectare + 2 units Fe |
| 4 | NPK 21-7-14 coated with Fe composition Example 2 | 232 kg/hectare |

The solid fertilizers were spread on the respective plots of Bermuda grass using conventional fertilizer spreading equipment. The plots were assessed for various quality parameters including leaf colour at regular intervals after treatment and the results are shown in the table below:

| Treatment No | Leaf Colour Assessment (Higher number = greener leaf) | | |
|---|---|---|---|
| | 6 days after treatment | 21 days after treatment | 34 days after treatment |
| 1 | 2.4 c | 1.8 d | 3.1 e |
| 2 | 6.0 b | 6.4 abc | 6.2 a-d |
| 3 | 5.9 b | 6.2 abc | 5.6 cd |
| 4 | 7.3 a | 7.3 a | 7.5 a |

### (Different letters indicate significant differences)

Treatment 4 (involving the NPK fertilizer coated with the iron chelate composition) performed better than the other treatments, including the conventional treatment with ferrous sulphate, in terms of leaf colour. The improvement in leaf colour score over the conventional ferrous sulphate treatment was statistically significant at day 6 and at day 34. Improvements in overall turf quality and biomass were also observed with treatment 4 in comparison with the other treatments.

This trial demonstrates that the use of the iron chelate composition as a coating on solid fertilizer is an effective and convenient method of delivering iron to treat iron deficiency even though the levels of iron applied are relatively low compared to conventional practice.

### Example 9

Tests were carried out to assess the effect of the iron chelate compositions described above on fertilizer quality parameters when coated on to solid particulate fertilizer. Water-containing iron chelate compositions made according to WO0304128 and EP0334630 were also tested for comparison. The strength (= crushing strength, hardness) of fertilizer granules/prills is an important property used in quality control of fertilizer production. The crushing strength is one of the main parameters for evaluation of the physical properties of fertilizers and is significantly influenced by the content of free water in the fertilizer.

Each of the iron chelate compositions was applied to granular urea (granular size approximately 3mm) at a rate equivalent to 5 litres per tonne (equivalent to about 0.65 wt% of the final product) using a lab scale conical blender. 1 kg of urea was added to the blender and the appropriate quantity of iron chelate composition added to the fertilizer as it was mixed in the rotating blender. Blending was continued for 20 seconds after addition to allow thorough distribution and coating of the iron chelate composition over the urea. The treatments used were as follows:
1. Control - Untreated
2. 5L/mt Non-aqueous Iron Chelate Composition according to Example 4 above
3. 5L/mt Water-based Iron Chelate Composition according to Example 1 in WO03042128
4. 5L/mt Water/solvent based Iron Chelate Composition according to Example 1 in EP0334630

Note: "mt" is metric tonne = 1000 kg.

The coated urea was bagged and stored for one week before the crushing strength of the granules was tested using a Hi-way New Leader Hardness Tester according to the following method.

An individual granule was placed on a smooth, solid surface (lab bench top) and the plunger of the tester was placed over the granule. The tester was pressed down until the granule fractured and the reading from the scale noted.

The test was carried out at room temperature (ca. 20°C) and repeated 20 times for each treatment. The results are shown below.

| No | Treatment | Crushing Strength |
|---|---|---|
| 1 | Untreated Control | 3.7 |
| 2 | 5L/mt Non-aqueous Composition according to Example 4 | 3.4 |
| 3 | 5L/mt Water-based Composition according to Example 1 in WO03042128 | 2.3 |
| 4 | 5L/mt Water/solvent based Composition according to Example 1 in EP0334630 | 2.4 |

Fertilizer application guidelines recommend that any granule with a crushing strength less than 3 should not be broadcast with spinner speeds over 700rpm.

The results clearly demonstrate that the composition according to the present invention has less impact on the strength of fertilizer granules than the water-containing compositions disclosed in the prior art.

### Example 10

Caking tendency is another very important fertilizer quality parameter. Tests were carried out to assess the effect of the iron chelate compositions described above on caking tendency when coated on to granular calcium ammonium nitrate (CAN). Water-containing iron chelate compositions made according to WO03042128 and EP0334630 were again tested for comparison.

Each of the iron chelate compositions was applied to granular CAN using a lab scale conical blender at rates required to add 0.02% w/w Fe to the fertilizer. 1 kg of CAN was added to the blender and the appropriate quantity of iron chelate composition added to the fertilizer as it was mixed in the rotating blender. Blending was continued for 20 seconds after addition to allow thorough distribution and coating of the iron chelate composition over the CAN. The treatments used were as follows
1. 5L/mt Non-aqueous Iron Chelate Composition according to Example 6 above
2. 5L/mt Non-aqueous Iron Chelate Composition according to Example 7 above
3. 6.7L/mt Water-based Iron Chelate Composition according to Example 1 in WO03042128
4. 3.7L/mt Water/solvent based Iron Chelate Composition according to Example 1 in EP0334630

500 g samples of the coated CAN were placed in plastic bags, sealed and stored under 1 kg weights at 50°C for 10 days. After this time the bags were opened and the fertilizer assessed for any signs of caking. The results were as follows:

| No | Treatment | Assessment |
|---|---|---|
| 1 | 5L/mt Non-aqueous Composition according to Example 6 | Free-flowing; no caking |
| 2 | 5L/mt Non-aqueous Composition according to Example 7 | Free-flowing; no caking |
| 3 | 5L/mt Water-based Composition according to Example 1 in WO03042128 | Caked |
| 4 | 5L/mt Water/solvent based Composition according to Example 1 in EP0334630 | Caked |

The results clearly demonstrate that the non-aqueous compositions according to the present invention have less impact on the caking tendency of fertilizer granules than the water-containing compositions disclosed in the prior art.

### Example 11

A conditioning agent containing the following elements was prepared:

| | |
|---|---|
| FeEDDHA (6% w/w Fe; 4.8% o-o) | 541.6 g |
| Monoethylene glycol | 438 g |
| Urea | 4.4 g |
| Anhydrous citric acid | 15.0 g |
| Anti-foam agent | 1.0 g |
| Total | 1000.0 g |

The pH of the conditioning agent was 7.0.

The product was prepared in a similar manner to Example 6 except that urea was dissolved in monoethylene glycol prior to the addition of the iron chelate component.

The conditioning agent was coated on fertilizer particles comprising calcium ammonium nitrate (CAN) at a ratio of 3 L/mt. The same conditioning agent was prepared without the citric acid with the amount of the other components unchanged, and the agent was coated on particles comprising CAN. Untreated CAN particles were used as a control. 100g samples of the three batches of particles were weighed into 2-litre plastic bottles which were sealed with a bung and a Drager tube inserted in order to measure the concentration of ammonia over 8 and 24 hours. The results were as follows:

| Fertiliser | Ammonia Concentration After 8 hrs | Ammonia Concentration After 24 hrs |
|---|---|---|
| CAN - Untreated | 10 mg/l | 50 mg/l |
| CAN coated with 3L/MT Original Fe Composition (3.25% w/w Fe) | 50 mg/l | 300 mg/l |
| CAN coated with 3L/MT Fe Composition (3.25% w/w Fe) adjusted to pH 7 with citric acid | 25 mg/l | 150 mg/l |

## Claims

1. A fertilizer particle comprising a core and an outside layer of a conditioning agent comprising an iron chelate component dissolved in a solvent, **characterized in that** the solvent is selected from the group of glycols, glycol ethers and mixtures thereof, and the solvent represents from about 30 to about 90 weight% of the conditioning agent.

2. Fertilizer particle according to claim 1, wherein the conditioning agent comprises urea.

3. Fertilizer particle according to claim 1 or 2, wherein the conditioning agent comprises an acid selected from the group of citric acid, malic acid and mixtures thereof.

4. Fertilizer particle according to any one of claims 1 to 3, wherein the pH of the conditioning agent is between 5.0 and 9.0, in particular between 5.0 and 7.0.

5. Fertilizer particle according to any one of claims 1 to 4, wherein the conditioning agent is essentially water-free.

6. Fertilizer particle according to any one of claims 1 to 5, wherein the solvent is selected from the group of monoethylene glycol, monopropylene glycol, diethylene glycol, 2-(2-ethoxyethoxy)ethan-1-ol, also known as diethylene glycol monoethyl ether, and mixtures thereof.

7. Fertilizer particle according to any one of claims 1 to 6, wherein the conditioning agent comprises at least 30 g/L of iron, in particular at least 35 g/L of iron, more in particular at least 40 g/L of iron, even more in particular at least 44 g/L of iron.

8. Fertilizer particle according to any one of claims 1 to 7, wherein the iron chelate component is a ferric chelate complex of a chelating agent, wherein the chelating agent is an amino-alcohol or an aminopolycarboxylic acid, in particular selected from the group of ethylenediamine-N, N'-di[(ortho-hydroxyphenyl) acetic acid], ethylenediamine-N-[(ortho-hydroxyphenyl)acetic acid]-N'-[(para-hydroxyphenyl)acetic acid], ethylenediamine-N,N'-di[ortho-hydroxy-methylphenyl]acetic acid], ethylenediamine-N-[ortho-hydroxy-methylphenyl]acetic acid]-N'-[(para-hydroxy-methylphenyl)acetic acid] or N,N'-di(2-hydroxybenzyl)ethylenediamine-N,N'-diacetic acid, and mixtures thereof.

9. Fertilizer particle according to any one of claims 1 to 8, wherein the conditioning agent comprises an anti-foam agent.

10. Fertilizer particle according to any one of claims 1 to 9, wherein the mass ratio of iron chelate component to solvent in the conditioning agent is in the range of from 1:9 to 3:1, in particular in the range of from 1:3 to 3:1, and more in particular in the range of from 1:2 to 2:1.

11. Fertilizer particle according to any one of claims 1 to 10, wherein the conditioning agent represents 0.1 to 2.0 weight%, in particular 0.1 to 1.0 weight%, of the fertilizer particle.

12. Fertilizer particle according to any one of claims 1 to 11, wherein the fertilizer core comprises at least one component selected from the group of urea, ammonium salts, nitrate salts, phosphate salts, potassium salts, calcium nitrate and mixtures thereof.

13. A method to manufacture a fertilizer particle, wherein the fertilizer particle comprises a layer of a conditioning agent comprising iron, the method comprising the steps of:
a. providing a fertilizer particle core;
b. applying to the fertilizer particle core an amount of a conditioning agent comprising an iron chelate component dissolved in a solvent selected from the group of glycols, glycol ethers and mixtures thereof, wherein the solvent represents from about 30 to about 90 wt% of the conditioning agent.

14. Method according to claim 13, wherein the conditioning agent comprises urea.

15. A non-aqueous liquid composition comprising an iron chelate component dissolved in a solvent selected from the group of glycols, glycol ethers and mixtures thereof, and urea, wherein the liquid composition comprises at least 30 g/L of iron.

16. Non-aqueous liquid composition according to claim 15, wherein the composition comprises from about 0.1 to about 10 weight% of urea relative to the weight of the composition, in particular 0.1 to 5.0 weight% of urea.

17. Non-aqueous liquid composition according to claim 15 or 16, wherein the composition comprises between 30 and 90 weight% of the solvent.

18. The use of a composition as a coating agent for fertilizer particles, the composition comprising an iron chelate component dissolved in a solvent selected from the group consisting of glycols, glycol ethers and mixtures thereof, and optionally urea.

## Patentansprüche

1. Düngemittelteilchen mit einem Kern und einer äußeren Schicht aus einem Konditionierungsmittel, das eine in einem Lösungsmittel gelöste Eisenchelatkomponente umfasst, **dadurch gekennzeichnet, dass** das Lösungsmittel aus der Gruppe von Glycolen, Glycolethern und Mischungen davon ausgewählt ist und das Lösungsmittel von etwa 30 bis etwa 90 Gew.-% des Konditionierungsmittels repräsentiert.

2. Düngemittelteilchen nach Anspruch 1, wobei das Konditionierungsmittel Harnstoff umfasst.

3. Düngemittelteilchen nach Anspruch 1 oder 2, wobei das Konditionierungsmittel eine Säure umfasst, die aus der Gruppe von Zitronensäure, Apfelsäure und Mischungen davon ausgewählt ist.

4. Düngemittelteilchen nach einem der Ansprüche 1 bis 3, wobei der pH-Wert des Konditionierungsmittels zwischen 5,0 und 9,0 liegt, insbesondere zwischen 5,0 und 7,0.

5. Düngemittelteilchen nach einem der Ansprüche 1 bis 4, wobei das Konditionierungsmittel im Wesentlichen wasserfrei ist.

6. Düngemittelteilchen nach einem der Ansprüche 1 bis 5, wobei das Lösungsmittel aus der Gruppe von Monoethylenglycol, Monopropylenglycol, Diethylenglycol, 2-(2-Ethoxyethoxy)ethan-1-ol, auch bekannt als Diethylenglycolmonoethylether, und Mischungen davon ausgewählt ist.

7. Düngemittelteilchen nach einem der Ansprüche 1 bis 6, wobei das Konditionierungsmittel mindestens 30 g/L Eisen, insbesondere mindestens 35 g/L Eisen, genauer gesagt mindestens 40 g/L Eisen, noch genauer gesagt mindestens 44 g/L Eisen umfasst.

8. Düngemittelteilchen nach einem der Ansprüche 1 bis 7, wobei die Eisenchelatkomponente ein Eisen(III)-chelatkomplex eines Chelatbildners ist, wobei es sich bei dem Chelatbildner um einen Aminoalkohol oder eine Aminopolycarbonsäure handelt, insbesondere ausgewählt aus der Gruppe von Ethylendiamin-N,N'-di[(ortho-hydroxyphenyl)essigsäure], Ethylendiamin-N-[(ortho-hydroxyphenyl)essigsäure]-N'-[(para-hydroxyphenyl)essigsäure], Ethylendiamin-N,N'-di[ortho-hydroxy-methylphenyl]essigsäure, Ethylendiamin-N-[ortho-hydroxy-methylphenyl]essigsäure]-N'-[(para-hydroxy-methylphenyl)essigsäure] oder N,N'-di(2-Hydroxybenzyl)ethylendiamin-N,N'-diessigsäure, und Mischungen davon.

9. Düngemittelteilchen nach einem der Ansprüche 1 bis 8, wobei das Konditionierungsmittel ein Antischaummittel umfasst.

10. Düngemittelteilchen nach einem der Ansprüche 1 bis 9, wobei das Massenverhältnis von Eisenchelatkomponente zu Lösungsmittel in dem Konditionierungsmittel im Bereich von 1:9 bis 3:1 liegt, insbesondere im Bereich von 1:3 bis 3:1, und genauer gesagt im Bereich von 1:2 bis 2:1.

11. Düngemittelteilchen nach einem der Ansprüche 1 bis 10, wobei das Konditionierungsmittel 0,1 bis 2,0 Gew.-%, insbesondere 0,1 bis 1,0 Gew.-%, des Düngemittelteilchens repräsentiert.

12. Düngemittelteilchen nach einem der Ansprüche 1 bis 11, wobei der Düngemittelkern mindestes eine Komponente umfasst, die aus der Gruppe von Harnstoff, Ammoniumsalzen, Nitratsalzen, Phosphatsalzen, Kaliumsalzen, Calciumnitrat und Mischungen davon ausgewählt ist.

13. Verfahren zur Herstellung eines Düngemittelteilchens, wobei das Düngemittelteilchen eine Schicht aus einem Eisen umfassenden Konditionierungsmittel umfasst, wobei das Verfahren die folgenden Schritte umfasst:
a. Bereitstellen eines Düngemittelteilchenkerns;
b. Aufbringen auf den Düngemittelteilchenkern eine Menge eines Konditionierungsmittels, das eine Eisenchelatkomponente umfasst, die in einem Lösungsmittel gelöst ist, das aus der Gruppe von Glycolen, Glycolethern und Mischungen davon ausgewählt ist, wobei das Lösungsmittel von etwa 30 bis etwa 90 Gew.-% des Konditionierungsmittels repräsentiert.

14. Verfahren nach Anspruch 13, wobei das Konditionierungsmittel Harnstoff umfasst.

15. Nichtwässrige flüssige Zusammensetzung mit einer Eisenchelatkomponente, die in einem Lösungsmittel gelöst ist, das aus der Gruppe von Glycolen, Glycolethern und Mischungen davon ausgewählt ist, und Harnstoff, wobei die flüssige Zusammensetzung mindestens 30 g/L Eisen umfasst.

16. Nichtwässrige flüssige Zusammensetzung nach Anspruch 15, wobei die Zusammensetzung von etwa 0,1 bis etwa 10 Gew.-% Harnstoff umfasst, bezogen auf das Gewicht der Zusammensetzung, insbesondere 0,1 bis 5,0 Gew.-% Harnstoff.

17. Nichtwässrige flüssige Zusammensetzung nach Anspruch 15 oder 16, wobei die Zusammensetzung zwischen 30 und 90 Gew.-% des Lösungsmittels umfasst.

18. Verwendung einer Zusammensetzung als Beschichtungsmittel für Düngemittelteilchen, wobei die Zusammensetzung eine Eisenchelatkomponente umfasst, die in einem Lösungsmittel gelöst ist, das aus der aus Glycolen, Glycolethern und Mischungen davon bestehenden Gruppe ausgewählt ist, und optional Harnstoff.

## Revendications

1. - Particule d'engrais comprenant un noyau et une couche externe d'un agent de conditionnement comprenant un composant chélate de fer dissous dans un solvant, **caractérisée par le fait que** le solvant est choisi dans le groupe des glycols, des éthers de glycol et des mélanges de ceux-ci, et le solvant représente d'environ 30 à environ 90 % en poids de l'agent de conditionnement.

2. - Particule d'engrais selon la revendication 1, dans laquelle l'agent de conditionnement comprend de l'urée.

3. - Particule d'engrais selon l'une des revendications 1 ou 2, dans laquelle l'agent de conditionnement comprend un acide choisi dans le groupe de l'acide citrique, de l'acide malique et des mélanges de ceux-ci.

4. - Particule d'engrais selon l'une quelconque des revendications 1 à 3, dans laquelle le pH de l'agent de conditionnement est entre 5,0 et 9,0, en particulier entre 5,0 et 7,0.

5. - Particule d'engrais selon l'une quelconque des revendications 1 à 4, dans laquelle l'agent de conditionnement est sensiblement exempt d'eau.

6. - Particule d'engrais selon l'une quelconque des revendications 1 à 5, dans laquelle le solvant est choisi dans le groupe du monoéthylène glycol, du monopropylène glycol, du diéthylène glycol, du 2-(2-éthoxyéthoxy)éthan-1-ol, également connu sous le nom d'éther monoéthylique du diéthylène glycol, et des mélanges de ceux-ci.

7. - Particule d'engrais selon l'une quelconque des revendications 1 à 6, dans laquelle l'agent de conditionnement comprend au moins 30 g/L de fer, en particulier au moins 35 g/L de fer, plus particulièrement au moins 40 g/L de fer, encore plus particulièrement au moins 44 g/L de fer.

8. - Particule d'engrais selon l'une quelconque des revendications 1 à 7, dans laquelle le composant chélate de fer est un complexe de chélate ferrique d'un agent chélatant, dans lequel l'agent chélatant est un amino-alcool ou un acide aminopolycarboxylique, en particulier choisi dans le groupe de l'éthylènediamine-N,N'-di[(ortho-hydroxyphényl) acétique acide], éthylènediamine-N-[(ortho-hydroxyphényl) acétique acide]-N'-[(para-hydroxyphényl) acétique acide], éthylènediamine-N,N'-di[ortho-hydroxy-méthylphényl] acétique acide], éthylènediamine-N-[ortho-hydroxy-méthylphényl] acétique acide]-N'-[(para-hydroxy-méthylphényl) acétique acide] ou N,N'-di(2-hydroxybenzyl)éthylènediamine-N,N'-diacétique acide, et les mélanges de ceux-ci.

9. - Particule d'engrais selon l'une quelconque des revendications 1 à 8, dans laquelle l'agent de conditionnement comprend un agent anti-mousse.

10. - Particule d'engrais selon l'une quelconque des revendications 1 à 9, dans laquelle le rapport massique du composant chélate de fer au solvant dans l'agent de conditionnement est dans la plage de 1:9 à 3:1, en particulier dans la plage de 1:3 à 3:1, et plus particulièrement dans la plage de 1:2 à 2:1.

11. - Particule d'engrais selon l'une quelconque des revendications 1 à 10, dans laquelle l'agent de conditionnement représente 0,1 à 2,0 % en poids, en particulier 0,1 à 1,0 % en poids, de la particule d'engrais.

12. - Particule d'engrais selon l'une quelconque des revendications 1 à 11, dans laquelle le noyau d'engrais comprend au moins un composant choisi dans le groupe de l'urée, des sels d'ammonium, des sels nitrates, des sels phosphates, des sels de potassium, du nitrate de calcium et des mélanges de ceux-ci.

13. - Procédé de fabrication d'une particule d'engrais, dans lequel la particule d'engrais comprend une couche d'un agent de conditionnement comprenant du fer, le procédé comprenant les étapes consistant à :
a. fournir un noyau de particule d'engrais ;
b. appliquer sur le noyau de particule d'engrais une quantité d'un agent de conditionnement comprenant un composant de chélate de fer dissous dans un solvant choisi dans le groupe des glycols, des éthers de glycol et des mélanges de ceux-ci, le solvant représentant d'environ 30 à environ 90 % en poids de l'agent de conditionnement.

14. - Procédé selon la revendication 13, dans lequel l'agent de conditionnement comprend de l'urée.

15. - Composition liquide non aqueuse comprenant un composant chélate de fer dissous dans un solvant choisi dans le groupe des glycols, des éthers de glycol et des mélanges de ceux-ci, et de l'urée, la composition liquide comprenant au moins 30 g/L de fer.

16. - Composition liquide non aqueuse selon l'une des revendications 15, dans laquelle la composition comprend d'environ 0,1 à environ 10 % en poids d'urée par rapport au poids de la composition, en particulier de 0,1 à 5,0 % en poids d'urée.

17. - Composition liquide non aqueuse selon la revendication 15 ou 16, dans laquelle la composition comprend entre 30 et 90 % en poids du solvant.

18. - Utilisation d'une composition comme agent de revêtement pour des particules d'engrais, la composition comprenant un composant chélate de fer dissous dans un solvant choisi dans le groupe consistant en glycols, éthers de glycol et mélanges de ceux-ci, et facultativement de l'urée.
